# EUROPEAN PATENT SPECIFICATION

(11) **EP 1 457 103 B1**
(45) Date of publication and mention of the grant of the patent: **05.08.2009**
(21) Application number: 04251276.4
(22) Date of filing: 04.03.2004
(51) Int. Cl.: A01D 34/68

(54) **Throttle**
Drosselklappe
Papillon

(30) Priority: 11.03.2003 GB 0305563
(43) Date of publication of application: 15.09.2004
(73) Proprietor: Husqvarna AB, 561 82 Huskvarna (SE)
(72) Inventor: Coates, Paul David, County Durham, DL1 3TJ (GB)

(56) References cited:
- US-A- 2 464 980
- US-A- 4 290 256
- US-A- 4 316 355
- US-A- 4 856 264
- US-A- 4 878 339

## Description

This invention relates to a wheeled lawnmower powered by an internal combustion engine.

A conventional lawnmower of this type has either a fixed engine speed or a manually-operable throttle to adjust the engine speed. Typically a lawnmower of this type operates at about 3000 rpm. Thus, a fixed speed engine will operate at about 3000 rpm, and a variable speed engine will run at any speed between an idling speed (of about 2400 rpm) set by the manufacturer and a full speed of about 3000 rpm. In practice, for reasons of grass cutting efficiency, a variable speed engine is almost always run at full speed when grass is being cut.

US 4856264 describes a hydraulic transmission apparatus for a lawnmower which permits the lawnmower wheels to be driven on their own, or enables drive to be transmitted to both the wheels and a cutter.

The aim of the invention is to provide a wheeled lawnmower powered by an internal combustion engine with improved throttle control.

The present invention provides a wheeled lawnmower comprising a cutter for cutting grass, an internal combustion engine for driving the cutter, a throttle for controlling the speed of rotation of the engine, and control means for controlling the throttle for changing the engine speed from a first speed to a second, increased speed, following the application of a force tending to rotate a wheel of the lawnmower.

In a preferred embodiment, the engine is arranged to drive at least said wheel via a clutch. In this case, the control means may be constituted by a control lever, a throttle linkage between the control lever and the throttle, and a clutch linkage between the lever and the clutch, the arrangement being such that movement of the control lever from a first operating position to a second operating position causes the clutch linkage to engage the clutch to provide drive to at least said wheel, and causes the throttle linkage to change the engine speed from the first speed to the second speed.

Preferably, the throttle linkage is a throttle cable extending between the control lever and the throttle, and the clutch linkage is a clutch cable extending between the control lever and the clutch.

Alternatively, the control means is constituted by a a device for detecting movement of the lawnmower, and a throttle linkage between said device and the throttle, the arrangement being such that, as the lawnmower begins to move, the device actuates the throttle linkage thereby causing the throttle to change the engine speed from the first speed to the second speed. This enables the invention to be applied to a push lawnmower.

Advantageously, the first engine speed is an idle speed, typically substantially 2400 rpm, and the second engine speed is the full speed of the engine, typically 3000 rpm.

The invention will now be described in greater detail, by way of example, with reference to the drawings, in which:
Figures 1a and 1b are side elevations of the handle of a lawnmower constructed in accordance with the invention, showing respectively two operating positions of a drive control lever;
Figures 2a and 2b are side elevations of the engine housing of the lawnmower, showing the respective throttle positions; and
Figure 3 is a side elevation of the handle of a modified form of the lawnmower of Figures 1 and 2.

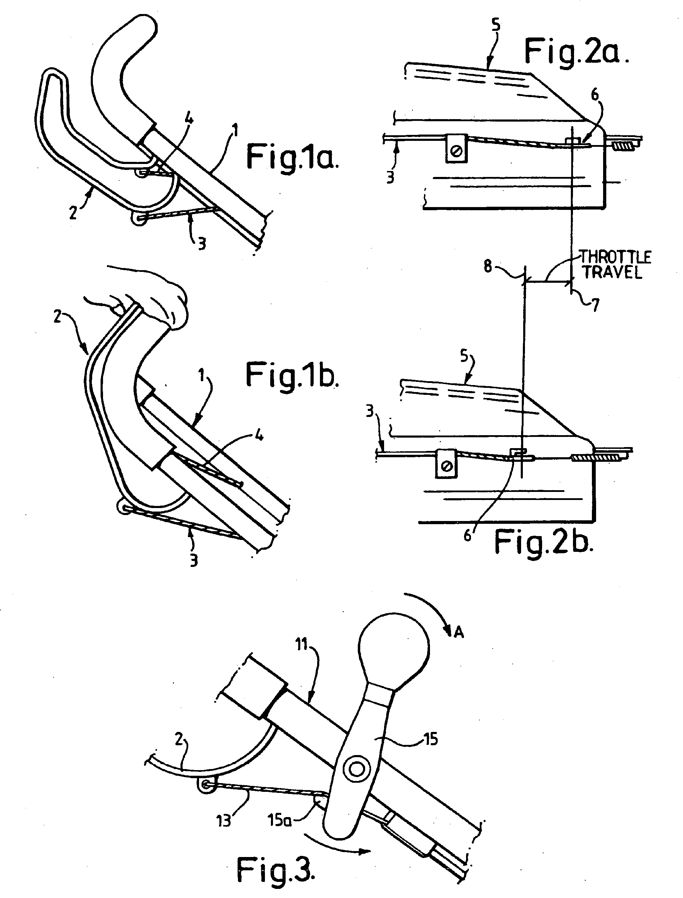

Referring to the drawings, Figure 1a shows the upper portion of the handle 1 of a internal combustion engine powered lawnmower (not shown). The handle 1 supports a drive control lever (bail arm) 2, to which are connected a throttle control cable 3 and a drive control cable 4.

In use, the engine 5 (see Figures 2a and 2b) of the lawnmower is started in the normal way by a starter (not shown) constituted by a pull cord. The engine 5 can only be started once an operator pressure control (OPC) lever (not shown) has been operated.

The OPC lever acts as a deadman's handle so that, in use, release of the OPC lever causes the engine 5 to cut out. The speed of the engine 5 is controlled by a throttle 6 operated by the throttle control cable 3. Figure 2a shows the throttle 6 in the engine idle position, that is to say in the position of lowest throttle. This is the position of the throttle 6 when the drive control lever 2 is in the position shown in Figure 1a.

The throttle control cable 3 controls a clutch (not shown) which acts, in use, to control drive from the engine 5 to the drive wheels (not shown) of the lawnmower.

In use, after the engine 5 has been started following actuation of the OPC lever and the pull cord, so that the engine runs at the manufacturers idle speed, the engine automatically throttles to full speed upon actuation of the drive control lever 2. Thus, as shown in Figure 1b, actuation of the drive control lever 2 pulls both control cables 3 and 4, thereby simultaneously operating the clutch to engage drive to the wheels of the lawnmower, and to increase the engine speed by moving the throttle 6 from the idle position (indicated by the reference numeral 7 in Figure 2a) to the full speed position (indicated by the reference numeral 8 in Figure 2b). When the drive control lever 2 is released, the clutch is released so drive to the wheels stops, and the throttle 6 is returned to its idle position 7, by the cables 4 and 3 respectively. The return movements of the cables 3 and 4 may be assisted by return springs (not shown).

The lawnmower described above has automatic throttle control which has the advantage that its engine works at its most efficient when the lawnmower is in use, thereby ensuring efficient cutting and collecting of grass, whilst permitting economical operation (at idle speed) when the mower is stationary and not required to cut and collect grass.

Figure 3 shows the upper portion of the handle 11 of a modified form of internal combustion engine powered lawnmower (not shown). The handle 11 supports a drive control level (bail arm) 12, to which are connected a throttle control cable 13 and a drive control cable (not shown - but similar to the cable 4 of the embodiment of Figures 1 and 2). The throttle control cable 13 and the drive control cable are connected to a throttle (not shown - but similar to the throttle 6 of the embodiment of Figures 1 and 2) in a similar manner to that described above with reference to Figures 1 and 2.

The main difference between this embodiment and that of Figures 1 and 2, is the provision of an override lever 15 which is pivotally connected to the handle 11 in the region of the drive control lever 12. The override lever 15 is provided with an extension flange 15a which engages with the throttle control cable 13. In order to use this lawnmower at full engine speed, when not wanting to use the power drive, the override lever 15 is rotated from the position shown in Figure 3 in a clockwise direction, as indicated by the arrow A, so as to force the throttle control cable 13 towards the handle 11, and thereby to move the throttle from the idle position to the full speed position.

The Figure 3 embodiment has the advantage of permitting the lawnmower to be used at full engine speed for efficient grass cutting without engaging the power drive. This is particularly useful when the lawnmower is needed to cut grass at the corners of a lawn, or in other confined areas, where sudden engagement of the power drive would impede accurate control of the movement of the lawnmower.

It will be apparent that modifications could be made to the lawnmower described above. For example, the throttle cable could be replaced by any suitable form of throttle linkage. It would also be possible to control throttling electronically, for example by means of a control button provided on the lawnmower handle, the control button being electronically linked to an actuator associated with the throttle.

The advantages of automatic throttling could also be provided for an internal combustion engine powered lawnmower of the push variety, that is to say a lawnmower which does not have the provision of drive to its wheels. In this case, the drive control lever 2 would be replaced by a device for detecting movement of the lawnmower, following pushing (or pulling) by the user, and for actuating the throttle via a suitable throttle linkage. For example, the device could be associated with an actuator which is rotatable with one of the wheels of the lawnmower, so that, as that wheel begins to move, it causes the device to move, thereby moving a throttle control linkage to move the throttle from the idle position to the full speed position.

The advantages of automatic throttling could also be provided for an internal combustion engine powered lawnmower of the ride-on (tractor) variety.

It would also be possible to modify the lawnmower described above by replacing some or all of the wheels by one or more rollers.

## Claims

1. A wheeled lawnmower comprising a cutter for cutting grass, an internal combustion engine (5) for driving the cutter, a throttle (6) for controlling the speed of rotation of the engine, **characterised by** control means (2, 3, 4) for controlling the throttle for changing the engine speed from a first speed to a second, increased speed, following the application of a force tending to rotate a wheel of the lawnmower.

2. A lawnmower as claimed in claim 1, wherein the engine (5) is arranged to drive at least said wheel via a clutch.

3. A lawnmower as claimed in claim 2, wherein the control means is constituted by a control lever (2), a throttle linkage (3) between the control lever and the throttle (6), and a clutch linkage (4) between the lever and the clutch, the arrangement being such that movement of the control lever from a first operating position to a second operating position causes the clutch linkage to engage the clutch to provide drive to at least said wheel, and causes the throttle linkage to change the engine speed from the first speed to the second speed.

4. A lawnmower as claimed in claim 3, wherein the throttle linkage is a throttle cable (3) extending between the control lever (2) and the throttle (6), and the clutch linkage is a clutch cable (4) extending between the control lever and the clutch.

5. A lawnmower as claimed in claim 1, wherein the control means is constituted by a device for detecting movement of the lawnmower, and a throttle linkage (3) between said device and the throttle (6), the arrangement being such that, as the lawnmower begins to move, the device actuates the throttle linkage thereby causing the throttle to change the engine speed from the first speed to the second speed.

6. A lawnmower as claimed in any one of claims 1 to 5, wherein the first engine speed is an idle speed.

7. A lawnmower as claimed in claim 6, wherein the first engine speed is substantially 2400 rpm.

8. A lawnmower as claimed in any one of claims 1 to 7, wherein the second speed is the full speed of the engine.

9. A lawnmower as claimed in claim 8, wherein the second speed is substantially 3000 rpm.

## Patentansprüche

1. Rasenmäher mit Rädern, umfassend eine Schneidvorrichtung zum Schneiden von Gras, einen Verbrennungsmotor (5) zum Antreiben der Schneidvorrichtung, eine Drosselklappe (6) zum Steuern der Drehzahl des Motors, **gekennzeichnet durch** ein Steuermittel (2, 3, 4) zum Steuern der Drosselklappe zum Ändern der Motordrehzahl von einer ersten Drehzahl zu einer zweiten, erhöhten Drehzahl, nach Anwendung einer Kraft, die versucht, ein Rad des Rasenmähers zu drehen.

2. Rasenmäher nach Anspruch 1, wobei der Motor (5) angeordnet ist, mindestens das Rad über eine Kupplung anzutreiben.

3. Rasenmäher nach Anspruch 2, wobei das Steuermittel von einem Steuerhebel (2), ein Drosselklappengestänge (3) zwischen dem Steuerhebel und der Drosselklappe (6) und ein Kupplungsgestänge (4) zwischen dem Hebel und der Kupplung gebildet ist, wobei die Anordnung so ausgestaltet ist, dass die Bewegung des Steuerhebels von einer ersten Betriebsstellung zu einer zweiten Betriebsstellung verursacht, dass das Kupplungsgestänge in die Kupplung eingreift, um mindestens dem Rad Antrieb bereitzustellen, und das Drosselklappengestänge veranlasst, die Motordrehzahl von der ersten Drehzahl zur zweiten Drehzahl zu ändern.

4. Rasenmäher nach Anspruch 3, wobei das Drosselklappengestänge ein Drosselklappenzug (3) ist, der sich zwischen dem Steuerhebel (2) und der Drosselklappe (6) erstreckt, und das Kupplungsgestänge ein Kupplungszug (4) ist, der sich zwischen dem Steuerhebel und der Kupplung erstreckt.

5. Rasenmäher nach Anspruch 1, wobei das Steuermittel aus einer Vorrichtung zum Erkennen der Bewegung des Rasenmähers und einem Drosselklappengestänge (3) zwischen der Vorrichtung und der Drosselklappe (6) besteht, wobei die Anordnung so ausgestaltet ist, dass wenn sich der Rasenmäher zu bewegen beginnt, die Vorrichtung das Drosselklappengestänge betätigt und **dadurch** veranlasst, dass die Drosselklappe die Motordrehzahl von der ersten Drehzahl zur zweiten Drehzahl ändert.

6. Rasenmäher nach einem beliebigen der Ansprüche 1 bis 5, wobei die erste Motordrehzahl eine Leerlaufdrehzahl ist.

7. Rasenmäher nach Anspruch 6, wobei die erste Motordrehzahl im Wesentlichen 2.400 U/min beträgt.

8. Rasenmäher nach einem beliebigen der Ansprüche 1 bis 7, wobei die zweite Drehzahl die volle Motordrehzahl ist.

9. Rasenmäher nach Anspruch 8, wobei die zweite Drehzahl im Wesentlichen 3.000 U/min beträgt.

## Revendications

1. Tondeuse à gazon sur roues comprenant une lame pour couper de l'herbe, un moteur à combustion interne (5) pour entraîner la lame, un papillon (6) pour commander la vitesse de rotation du moteur, **caractérisée par** un moyen de commande (2, 3, 4) pour commander le papillon afin de changer la vitesse du moteur d'une première vitesse à une seconde vitesse augmentée, suite à l'application d'une force sujette à faire tourner une roue de la tondeuse à gazon.

2. Tondeuse à gazon selon la revendication 1, dans laquelle le moteur (5) est agencé pour entraîner au moins ladite roue par le biais d'un embrayage.

3. Tondeuse à gazon selon la revendication 2, dans laquelle le moyen de commande est constitué d'un levier de commande (2), une tringlerie de papillon (3) entre le levier de commande et le papillon (6), et une tringlerie d'embrayage (4) entre le levier et l'embrayage, l'agencement étant tel qu'un mouvement du levier de commande d'une première position de fonctionnement à une seconde position de fonctionnement amène la tringlerie d'embrayage à mettre l'embrayage en prise pour entraîner au moins ladite roue, et amène la tringlerie de papillon à changer la vitesse du moteur de la première vitesse à la seconde vitesse.

4. Tondeuse à gazon selon la revendication 3, dans laquelle la tringlerie de papillon est un câble d'accélérateur (3) s'étendant entre le levier de commande (2) et le papillon (6), et la tringlerie d'embrayage est un câble d'embrayage (4) s'étendant entre le levier dé commande et l'embrayage.

5. Tondeuse à gazon selon la revendication 1, dans laquelle le moyen de commande est constitué d'un dispositif pour détecter un mouvement de la tondeuse à gazon, et une tringlerie de papillon (3) entre ledit dispositif et le papillon (6), l'agencement étant tel que lorsque la tondeuse à gazon commence à se déplacer, le dispositif actionne la tringlerie de papillon amenant ainsi le papillon à changer la vitesse du moteur de la première vitesse à la seconde vitesse.

6. Tondeuse à gazon selon l'une quelconque des revendications 1 à 5, dans laquelle la première vitesse de moteur est une vitesse de marche à vide.

7. Tondeuse à gazon selon la revendication 6, dans laquelle la première vitesse de moteur est essentiellement de 2400 tr/min.

8. Tondeuse à gazon selon l'une quelconque des revendications 1 à 7, dans laquelle la seconde vitesse est la vitesse maximale du moteur.

9. Tondeuse à gazon selon la revendication 8, dans laquelle la seconde vitesse est essentiellement de 3000 tr/min.
